# NEW EUROPEAN PATENT SPECIFICATION

(11) **EP 0 129 092 B2**
(45) Date of publication and mention of the opposition decision: **09.04.1997**
(45) Mention of the grant of the patent: 11.04.1990
(21) Application number: 84105877.9
(22) Date of filing: 23.05.1984
(51) Int. Cl.: G05B 19/406

(54) **Numerical control device for use with a machine tool**
Numerisch gesteuertes Gerät zur Anwendung mit einem Werkzeug
Dispositif de commande numérique pour l'application avec une machine-outil

(30) Priority: 23.05.1983 JP 90273/83
(43) Date of publication of application: 27.12.1984
(73) Proprietor: MITSUBISHI DENKI KABUSHIKI KAISHA, Tokyo 100 (JP)
(72) Inventor: Sekikawa, Katsuhide Mitsubishi Denki K.K., Nagoya-shi Aichi (JP)
(74) Representative: Lehn, Werner, Dipl.-Ing.

(56) References cited:
- EP-A- 0 121 100
- US-A- 4 204 144
- Zeitschrift für wirtschaftliche Fertigung,1981,vol 8,pages 355-359
- Zeitschrift für wirtschaftliche Fertigung,1981,vol 8,pages 387-390
- Zeischrift für wirtschaftliche Fertigung,1981,vol 8,pages 353-357
- Zeitschrift für wirtschaftliche Fertigung,1981,vol 4,pages 153-155
- "Computer verification of Machine Control Data" by L.O.Ward,Proc 17th Numerical Control Society Annual Meeting and Technical Conference 27th-30th April 1980

## Description

The invention relates to a numerical control device according to the preamble of claim 1. Such a numerical control device is known from "Zeitschrift für wirtschaftliche Fertigung, 1981, vol. 8, pages 355-359". This document discloses a numerical control device including a CNC-controller controlling a lathe having first and second holder means, i.e. a chuck and a tail stock, for jointly holding a workpiece at opposite sides. Data indicative of dimensional details of the workpiece of the first and second holder means are entered to a central memory. A graphical display unit is coupled to said central memory for displaying the workpiece as held by a first holder mechanism (here the chuck). From the dimensional details entered into the central memory, a set of data for the graphical display is composed. Thus, limits or barriers for the chuck are made visible, in particular if the workpiece also comprises inner contours. One of the holder means is being disclosed as comprising a clamping means.

The document "Zeitschrift für wirtschaftliche Fertigung, 1982, vol. 8, pages 353-357" relates to graphic-dynamic simulation system in connection with a numerical control program of a lathe for machining a workpiece. This document is particularly directed to avoiding a collision between workpiece and other components. For this purpose, the graphic-dynamic simulation displays a chuck, a protection zone for the chuck, a protection zone for the tail stock and the workpiece itself. It is stated that the coordinates of the protection zones can also be used for including contours of the chuck and the tail stock in the graphical display. The displays shown in this document, however, lack the representation of the display of a tail stock in connection with the workpiece.

The document "Zeitschrift für wirtschaftliche Fertigung, 1981, vol. 4, pages 153-155" discloses a real-time simulation for program control and optimization in connection with the machining of a workpiece, which is displayed as being clamped by a clamping means on a display screen. Before a machining operation can be displayed on the display screen, first the contours of the workpiece are entered. In particular for cylindrical workpieces, the diameter and the length is entered. Thereafter, the workpiece is displayed clamped by one holding means on a display screen. Then, the simulation program starts, whereby a real-time representation of the operation speeds of the tool machining the clamped workpiece can be made visible. Also this document only discloses the display of the workpiece with one holder mechanism.

Reference is directed to our three co-pending European patent applications EP-A-0 12 90 90, EP-A 0 12 90 91 and EP-A-0 12 71 22 of even date which disclose and claim related subject-matter.

NC machining devices machine a workpiece by specifying the position of a tool with respect to the workpiece in the form of corresponding numerical information. The NC machining device can machine workpieces of complex configuration with ease and high accuracy at a high production rate.

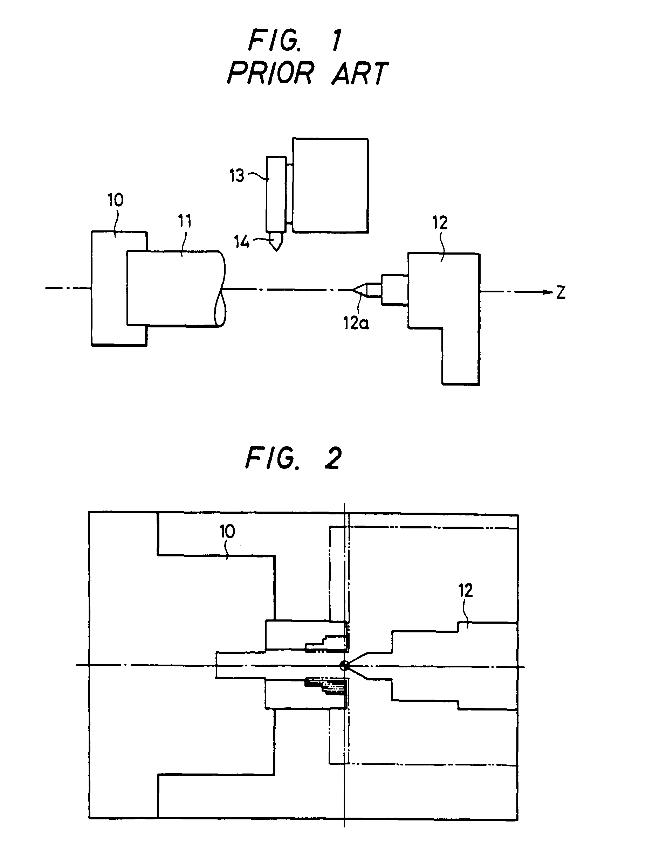

Fig. 1 of the accompanying drawings schematically shows a general machine tool controlled by a conventional NC device, the machine tool being a lathe by way of illustrative example. A cylindrical workpiece 11 fixedly clamped by a chuck 10 rotatable about a Z-axis has one end supported by a tip 12a of a tailstock 12. A cutting tool 14 is secured to a turret or tool base 13. For cutting the workpiece 11, the turret 13 is moved in the direction of the arrow Z to cause the cutting tool 14 to cut the workpiece 11.

Where the NC device includes a graphic display unit, the shape of the workpiece 11, a cutting path of the tool 14, and a finished shape of the workpiece 11 are displayed on the display unit for checking the machining program for possible interference between the workpiece and the tool and monitoring the cutting condition. The machining program is checked by displaying the tool path as indicated by dotted lines as shown, for example, in Fig. 2 of the accompanying drawings. Whether the workpiece and the tool interfere with each other or not is checked by the determined values of functions which express the shape and position of holder mechanisms composed of the chuck tailstock. It has been generally proposed in "Computer Verification of machine Control Data" by L. O. Ward (published in the Proceedings of the 17th Numerical Control Society Annual Meeting and Technical Conference 27th-30th April 1980) that a machining process could be graphically simulated at a CRT by displaying the relationship between the cutter, workpiece, holding fixture and machine tool. It is also proposed that machine control data or the cutter path will be dynamically compared with models of the raw stock, part geometry and holding fixture to verify part configuration and to detect possible collision or interference and/or unmachined conditions. It is also suggested that a full range of shading should be employed to improve visibility for the user. However, the positions and shapes of the workpiece and holding fixtures are not automatically determined based on input data representing configuration and size of the workpiece.

It is an object of the present invention to provide an NC device capable of automatically converting the shape of holder mechanisms of a lathe, such as a chuck and a tailstock, into a shape of a tool for holding a workpiece shape and displaying such a converted shape by processing data indicative of the shape of the workpiece.

This object is solved by a numerical control device according to claim 1. Further advantageous embodiments and improvements of the invention may be taken from the dependent claims.

The above and other objects, and advantages of the present invention will become more apparent from the following description when taken in conjunction with the accompanying drawings in which a preferred embodiment of the present invention is shown by way of illustrative example, and in which:
Fig. 1 is a schematic view of a lathe to which a conventional NC device is applied;
Fig. 2 is a schematic view explanatory of the checking of a machining program for the lathe shown in Fig. 1;
Figs. 3A and 3B are views showing the relationship between a workpiece shape and a chuck;
Fig. 4 is a schematic diagram showing dimensional details of a chuck and a tailstock;
Fig. 5A and 5B are diagrams showing coordinate data for graphic display;
Fig. 6 is a diagram depicting the relationship between a reference coordinate system and a local coordinate system;
Figs. 7A and 78 are diagrams illustrating the concepts of an absolute coordinate system and a relative coordinate system, respectively;
Fig. 8 is a flowchart of processing steps according to the present invention;
Fig. 9 is a block diagram of a hardware system used for executing the process illustrated in Fig. 8; and
Figs. 10A and 10B are schematic views showing the relationship between a workpiece shape and a tailstock.

According to the present invention, holder mechanisms such as indicated by reference numerals 10, 12 in Fig. 1 are displayed. A specific embodiment of the present invention will hereinafter be described.

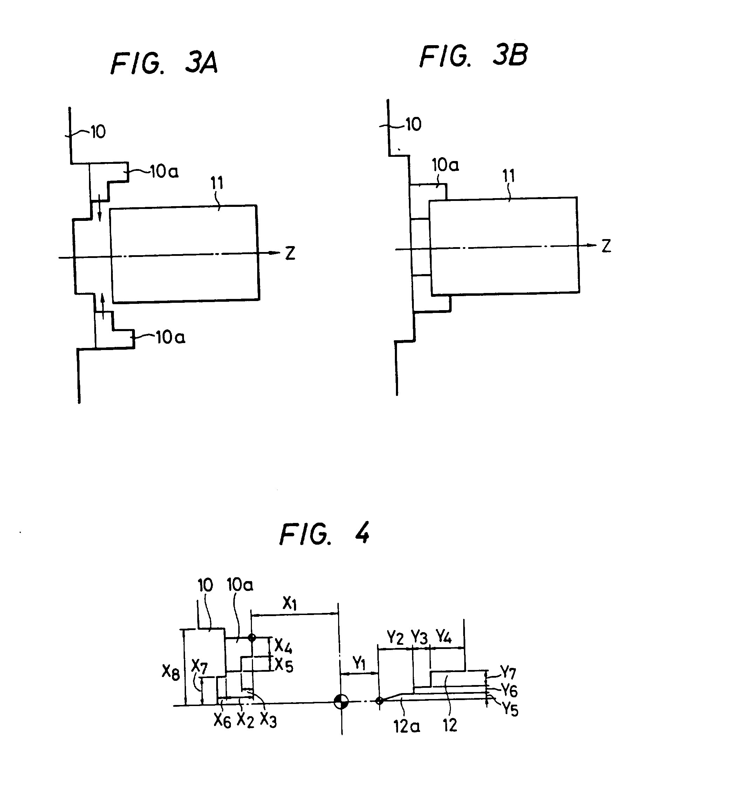

Figs. 3A and 38 are illustrated of graphic patterns such as that of a lathe to be applied to a graphic display unit. A first holder mechanism is composed of a chuck 10 and chuck jaws 10a for holding a workpiece 11. Where the chuck 10 is displayed as fixed in position, there is an instance where the workpiece 11 cannot be held by the chuck 10 as shown in Fig. 3A since the workpiece 11 may not be constant in shape and size. Dependent on the shape and size of the workpiece 11, the graphic pattern is converted so that the chuck jaws 10a will be moved so as to be able to hold the workpiece 11. Fig. 38 illustrates the graphic pattern as thus converted.

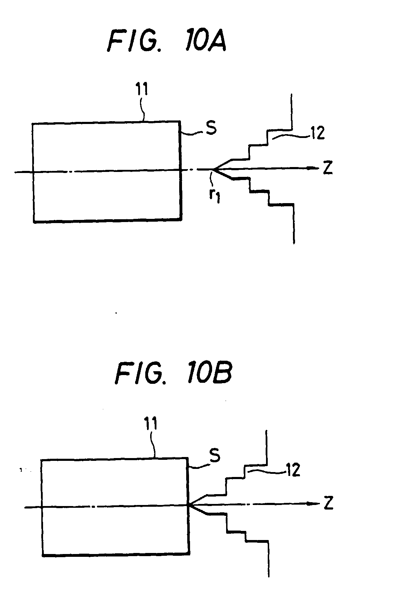

A second holder mechanism is composed of a tailstock 12 having a tip 12a as shown in Figs. 10A and 10B.

For a better understanding of the present invention, Fig. 4 shows dimensional details of the first and second holder mechanisms. Denoted in Fig. 4 at X₁-X₈ are dimensional details of the first holder mechanism, and Y₁-Y₇ dimensional details of the second holder mechanism.

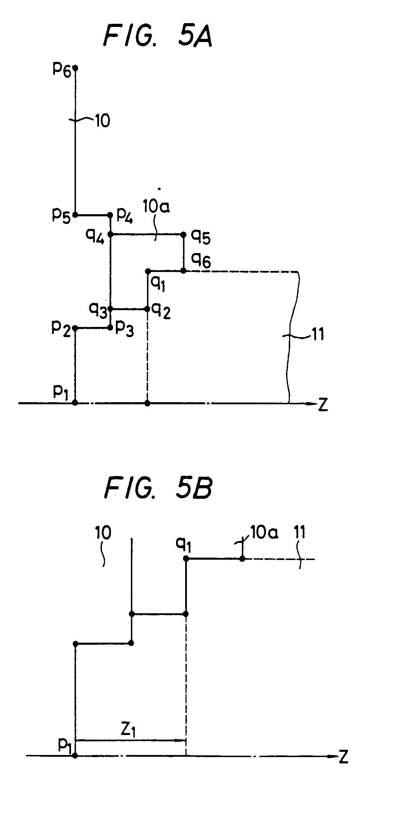

An appropriate example of graphic pattern conversion will be described with reference to Figs. 5A and 5B.

Data items to be displayed as graphic patterns are all expressed as coordinate data items as shown in Figs. 5A and 5B. In Figs. 5A and 5B, coordinate data items for the chuck 10 are indicated by pₙ (n = 1 through 6) and coordinate data items for the chuck jaw 10a are indicated by qₙ (n = 1 through 6), with p₁, q₁ serving as reference coordinates and pₙ, qₙ (n = 2 through 6) as relative coordinates from p₁, q₁.

The relative coordinates are used for the reason that, with such relative coordinates, if a reference point is positionally changed, then all points in a certain coordinate system having such a reference point as a reference will be renewed, but with all points expressed only by absolute coordinates, if a positional change were to be made, the extent of such a positional change would have to be computed for all points in the absolute coordinate system.

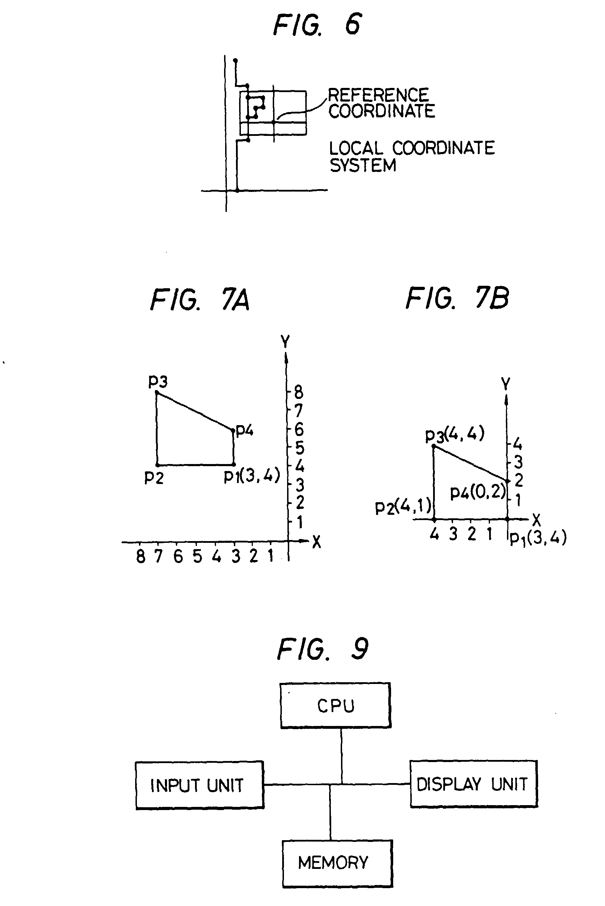

Reference coordinates will be simply described. Reference coordinates means having an origin of a local coordinate sysem as shown in Fig. 6. The reference coordinates are indicative of a single coordinate set or value when viewed from an outer coordinate system.

With such a coordinate data construction, the coordinates can be indicated as shown in Figs. 7A and 7B. Designated at p₁ in Fig. 7A is a reference point, while the other points are representative of values of an absolute coordinate system with p₁ being the origin. Fig. 78 shows a relative coordinate system having the reference point p₁ as the origin. As shown in Figs. 7A and 7B, when a graphic pattern of p₁ (n = 1 through 4 in the illustrated example) is to be moved, only the reference coordinates pₙ are renewed, and offsets (p₂ through p₄) are added to the reference coordinates p₁ to translate the same for thereby obtaining actual coordinates, whereupon the pattern is displayed.

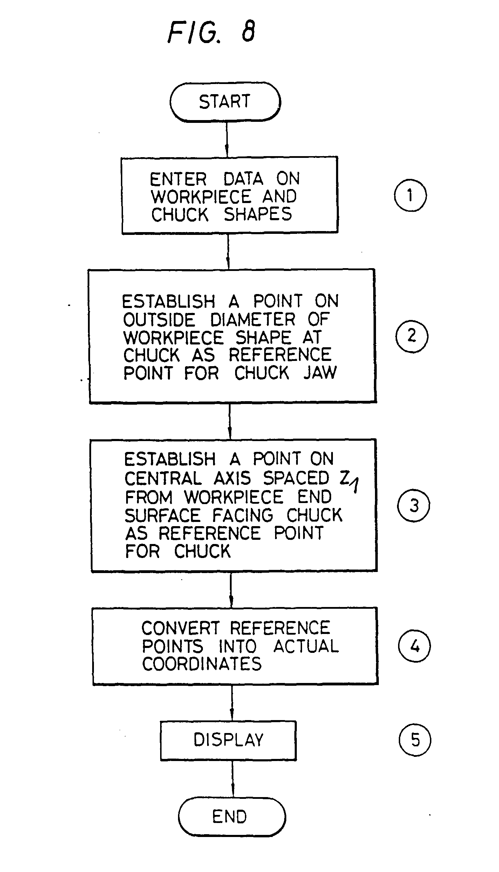

The reference coordinates p₁, q₁ of the chuck 10 and the chuck jaw 10a as shown in Figs. 5A and 5B can be be determined by an algorithm illustrated in Fig. 8. The algorithm of Fig. 8 is executed by a system shown in Fig. 9 whch operates as follows:

Data items indicative of the shape of the holder mechanism and on the diameter of the workpiece are entered through an input unit of the NC device and stored in a memory. Based on these data items, a CPU computes the position of a chuck jaw, generates a pattern corresponding to the shape thereof, and displays the same on a display unit.

The flowchart of Fig. 8 is composed of successive steps 1 through 5. A workpiece shape and a chuck shape are entered as coordinate data items in step 1. Coordinates on the outside diameter of the workpiece shape at the chuck are established as a reference point for the chuck jaw in the step 2. A point on the central axis which is spaced a distance Z₁ (Fig. 5B) from the end of the workpiece which faces the chuck is regarded as a reference point for the chuck in step 3. Actual coordinates can be determined by adding relative coordinates to the reference points thus defined in step 4. A chuck shape converted through linear interpolation of the actual coordinates is completely displayed together with the actual machining condition in step 5.

Figs. 10A and 10B are illustrative of the display of the tailstock 12 or the second holder mechanism. Reference coordinates r₁ (Fig. 10A) can be established as shown in Fig. 10B by setting a workpiece end surface S on the Z-axis and setting X at "0" (on the Z-axis). The following process is the same as described with respect to the chuck 10, i.e., the shape of the tailstock is defined by a local coordinate system, and the tip of the tailstock is given by reference coordinates, which are translated and displayed.

While in the foregoing embodiment the NC device has been described as being used with a lathe, the present invention is applicable to NC devices used in combination with various other machine tools such as a machining center.

Although a certain preferred embodiment has been shown and described, it should be understood that many changes and modifications may be made therein without departing from the scope of the appended claims.

## Claims

1. A numerical control device including:
a controller (CPU) for controlling a lathe having first and second holder mechanisms (10,12) for jointly holding a workpiece (11) at opposite sides thereof and for storing data indicative of dimensional details of said workpiece (11), dimensional details of said first holder mechanism (10) and dimensional details of said second holder mechanism (12) entered into said controller (CPU);
a graphic display unit coupled to said controller (CPU) for displaying the workpiece (11) as held by said first holder mechanism (10)
***characterized in that***
said graphic display unit displays said workpiece as held also by said second holder mechanism (12);
said workpiece (11) is a cylindrical workpiece (11);
said controller (CPU) computes the positions of said first and second holder mechanisms (10,12) including the positions of parts (10a) of said first holder mechanism (10) movable transversally to a central axis of the workpiece (11) which are displayed gripping said workpiece (11) as relative coordinate data (p1-pn,q1-qn,r1) in terms of relative coordinate systems (p,q,r);
said controller (CPU) determines (Fig. 8, steps 2,3) reference points in each of said relative coordinate systems
- by establishing (Fig. 8, step ②) a point (q1) on the outside diameter of the workpiece shape at said holder mechanism (10,10a) as a reference point for said relative coordinate system of said transversally movable parts (10a) of said first holder mechanism (10), and
- by establishing (Fig. 8, step ③) points (p1,r1) at respective distances (z1) from respective end surfaces (S) of said workpiece (11) facing said first and second holder mechanisms (10,12) and lying on said central axis of said workpiece (11) as reference points for the relative coordinate systems of said first holder mechanism (10) and said second holder mechanism (12);
- wherein one workpiece end coincides with one particular point of reference of one holder mechanism (10 or 12); and
whereby when a new workpiece (11) is to be displayed held by said first and second holder mechanisms (10, 12),
said controller (CPU) automatically computes the new positions of said first and second holder mechanisms (10,12) along the central axis of the workpiece (11) including the new positions of the transversally movable parts of said first holder mechanism (10,10a,) which are to be displayed gripping the workpiece (11), by only renewing said positions of said reference points (p1,q1,r1) on the basis of the data indicative of the dimensional details of said new workpiece (11).

2. A numerical control device according to claim 1, ***characterized by*** means for entering dimensional details of said first and second holder mechanisms (10,12) as coordinate data items.

3. A numerical control device according to claims 1 or 2, ***characterized in that*** a point at a distance (Z₁) from the end (S) of the workpiece (11) which faces the first holder mechanism (10) and lies on the central axis of the workpiece (11) is the reference point for the positions of the first and second holder mechanisms (10,12), wherein one workpiece end coincides with one particular point of reference of one holder mechanism (10 or 12).

4. A numerical control device according to claims 2 or 3, ***characterized in that*** said coordinate data items comprise coordinates of a relative coordinate system.

5. A machine tool ***characterized by*** a numerical ccntrol device according to any one of claims 1 to 4.

6. A numerical control device according to claim 1,
***characterized in that*** said controller (CPU) adds offsets to said reference points (p1,q1,r1) for determining said new positions.

7. A numerical control device according to claim 6,
***characterized in that*** said offsets respectively represent a difference in workpiece diameter and workpiece length between said gripped workpiece (11) and said new workpiece (11) to be displayed gripped.

## Patentansprüche

1. Numerische Steuereinrichtung, umfassend:
eine Steuereinrichtung (CPU) zum Steuern einer Drehmaschine, die erste und zweite Haltereinrichtungen (10, 12) aufweist, um gemeinsam ein Werkstück (11) an seinen gegenüberliegenden Seiten zu halten, und zum Speichern von Daten, die Dimensionseinzelheiten des Werkstücks (11), Dimensionseinzelheiten der ersten Haltereinrichtung (10) und Dimensionseinzelheiten der zweiten Haltereinrichtung (12), die in die Steuereinrichtung (CPU) eingegeben werden, anzeigen;
eine graphische Anzeigeeinheit, die mit der Steuereinrichtung (CPU) gekoppelt ist, um das Werkstück (11) anzuzeigen, so wie es von der ersten Haltereinrichtung (10) gehalten wird
***dadurch gekennzeichnet daß,***
die graphische Anzeigeeinheit das Werkstück anzeigt, so wie es auch von der zweiten Haltereinrichtung (12) gehalten wird;
das Werkstück (11) ein zylindrisches Werkstück (11) ist;
die Steuereinrichtung (CPU) die Positionen der ersten und zweiten Haltereinrichtungen (10, 12) einschließlich der Positionen von transversal zur Mittenachse des Werkstücks (11) bewegbaren Teilen (10a) der ersten Haltereinrichtung (10), die das Werkstück (11) ergreifend angezeigt werden, als relative Koordinatendaten (p1 - pn, q1 - qn, r1) in relativen Koordinatensystemen (p, q, r) berechnet;
die Steuereinrichtung (CPU) Referenzpunkte in jedem relativen Koordinatensystem bestimmt (Fig. 8, Schritte ②, ③)
- durch Einstellen (Fig. 8, Schritt ②) eines Punkts (q1) auf dem äußeren Durchmesser der Werkstückform an den Haltereinrichtungen (10, 10a) als einen Referenzpunkt für das relative Koordinatensystem der transversal bewegbaren Teile (10a) der ersten Haltereinrichtung (10);
- durch Einstellen (Fig. 8, Schritt ③) von Punkten (p1, r1) in jeweiligen Abständen (z1) von jeweiligen Endoberflächen (S) des Werkstücks (11), die auf die erste und zweite Haltereinrichtung (10, 12) zugekehrt sind und auf der Mittenachse des Werkstücks (11) liegen, als Referenzpunkte für die relativen Koordinatensysteme der ersten Haltereinrichtung (10) und der zweiten Haltereinrichtung (12);
- wobei ein Werkstückende mit einem bestimmten Referenzpunkt einer Haltereinrichtung (10) oder (12) übereinstimmt; und
wobei, wenn ein neues Werkstück (11) von den ersten und zweiten Haltereinrichtungen (10, 12) gehalten angezeigt werden soll,
die Steuereinrichtung (CPU) automatisch die neuen Positionen der ersten und zweiten Haltereinrichtungen (10, 12) entlang der Mittenachse des Werkstücks (11) einschließlich der neuen Positionen der transversal bewegbaren Teile der ersten Haltereinrichtung (10, 10a), die das Werkstück (11) ergreifend anzeigen sollen, nur durch Erneuern der Positionen der Referenzpunkte (p1, q1, r1) auf der Basis der Daten, die die Dimensionseinzelheiten des neuen Werkstücks (11) anzeigen, berechnet.

2. Numerische Steuereinrichtung nach Anspruch 1, ***gekennzeichnet durch*** eine Einrichtung zum Eingeben von Dimensionseinzelheiten der ersten und zweiten Haltereinrichtungen (10, 12) als Koordinatendatenteile

3. Numerische Steuereinrichtung nach Anspruch 1 oder 2, ***dadurch gekennzeichnet, daß*** ein Punkt in einem Abstand (Z₁) von dem Ende (S) des Werkstücks (11), welches der ersten Haltereinrichtung (10) zugekehrt ist und auf der Mittenachse des Werkstücks (11) liegt, der Referenzpunkt für die Positionen der ersten und zweiten Haltereinrichtungen (10, 12) ist, wobei ein Werkstückende mit einem bestimmten Referenzpunkt einer Haltereinrichtung (10 oder 12) übereinstimmt.

4. Numerische Steuereinrichtung nach Anspruch 3 oder 3, ***dadurch gekennzeichnet, daß*** die Koordinatendatenteile Koordinaten eines relativen Koordinatensystems umfassen.

5. Maschinenwerkzeug, ***gekennzeichnet durch*** eine numerische Steuereinrichtung nach einem der Ansprüche 1 bis 4.

6. Numerische Steuereinrichtung nach Anspruch 1, ***dadurch gekennzeichnet, daß*** die Steuereinrichtung (CPU) Versätze zu den Referenzpunkten (p1, q1, r1) addiert, um die neuen Positionen zu bestimmen.

7. Numerische Steuereinrichtung nach Anspruch 6, ***dadurch gekennzeichnet, daß*** Versätze jeweils eine Differenz im Werkstückdurchmesser und in der Werkstücklänge zwischen dem ergriffenen Werkstück (11) und dem neuen Werkstück (11), welches ergriffen angezeigt werden soll, darstellen.

## Revendications

1. Un dispositif de commande numérique comprenant :
une unité de commande (CPU) destinée à commander un tour comportant des premier et second mécanismes de maintien (10, 12) pour maintenir conjointement une pièce à usiner (11) par les côtés opposés de celle-ci et à mettre en mémoire des données indicatrices des détails dimensionnels de ladite pièce à usiner (11), des détails dimensionnels dudit premier mécanisme de maintien (10), et des détails dimensionnels dudit second mécanisme de maintien (12), introduites dans ladite unité de commande (CPU);
une unité d'affichage graphique, couplée à ladite unité de commande (CPU), pour afficher la pièce à usiner (11) lorsqu'elle est maintenue aussi par ledit premier mécanisme de maintien (10)
caractérisé en ce que
ladite unité d'affichage graphique affiche ladite pièce à usiner lorsqu'elle est maintenue aussi par ledit second mécanisme de maintien (12*);*
ladite pièce à usiner (11) est une pièce à usiner (11) de forme cylindrique;
ladite unité de commande (CPU) calcule les positions desdits premier et second mécanismes de maintien (10, 12), y compris les positions des parties (10a) dudit premier mécanisme de maintien (10) , à mobilité transversale par rapport à un axe central de la pièce à usiner (11), positions qui sont affichées pendant la saisie de la pièce à usiner (11), à titre de données de coordonnées relatives (p1-pn, q1-qn, r1) en terme de systèmes de coordonnées relatives (p, q, r);
ladite unité de commande (CPU) détermine (figure 8, aux étapes 2, 3) les points de référence de chacun desdits systèmes de coordonnées relatives
- en établissant (figure 8, étape 2) un point (ql) sur le diamètre extérieur du profil de la pièce usinée, sur ledit mécanisme de maintien (10, 10a), à titre de point de référence pour ledit système de coordonnées relatives desdites parties transversalement mobiles (10a) dudit premier mécanisme de maintien (10), et
- en établissant (figure 8, étape 3) des points (pl, rl), à des distances respectives (zl) des surfaces d'extrémité respectives (S) de ladite pièce à usiner (11) faisant face auxdits premier et deuxième mécanismes de maintien (10, 12) et situés sur ledit axe central de ladite pièce à usiner (11), à titre de points de référence pour lesdits systèmes de coordonnées relatives dudit premier mécanisme de maintien et dudit second mécanisme de maintien (12);
- dans lequel une extrémité de la pièce à usiner coïncide avec un point de référence particulier d'un mécanisme de maintien (10 ou 12); et
de manière que, lorsque une nouvelle pièce à usiner (11) est à afficher maintenue par lesdits premier et second mécanismes de maintien (10, 12),
ladite unité de commande (CPU) calcule automatiquement les nouvelles postions desdits premier et second mécanisme de maintien (10, 12) le long de l'axe central de la pièce à usiner (11), y compris les nouvelles positions des parties transversalement mobiles dudit premier mécanisme de maintien (10, 10a), qui sont à afficher pendant la saisie de la pièce à usiner (11), en renouvelant seulement lesdites positions desdits points de référence (p1, q1, r1), sur la base des données indicatrices des détails dimensionnels de la nouvelle pièce à usiner (11).

2. Un dispositif de commande numérique selon la revendication 1, caractérisé par des moyens destinés à introduire des détails dimensionnels desdits premier et second mécanismes de maintien (10, 12) sous la forme d'éléments de données de coordonnées.

3. Un dispositif de commande numérique selon la revendication 1 ou 2, caractérisé par le fait qu'un point, situé à une distance (Z₁) de l'extrémité (S) de la pièce à usiner (11) qui fait face au premier mécanisme de maintien (10) et se trouve sur l'axe central de la pièce à usiner (11), est pris comme point de référence pour les positions du premier et du second mécanisme de maintien (10, 12), dans lesquels une extrémité de pièce à usiner coïncide avec un point de référence particulier du mécanisme de maintien (10 ou 12).

4. Un dispositif de commande numérique selon les revendications 2 ou 3, caractérisé en ce que lesdits éléments de données de coordonnées comprennent des coordonnées d'un système de coordonnées relatives.

5. Une machine-outil caractérisé par un dispositif de commande numérique selon l'une quelconque des revendications 1 à 4.

6. Un dispositif de commande numérique selon la revendication 1, caractérisé en ce que ladite unité de commande (CPU) ajoute des décalages auxdits points de référence (pl, ql, rl) pour la détermination desdites nouvelles positions.

7. Un dispositif de commande numérique selon la revendication 6, caractérisé en ce que lesdits décalages représentent respectivement la différence entre le diamètre d'une pièce à usiner et la longueur de la pièce à usiner, entre ladite pièce à usiner (11) saisie et ladite nouvelle pièce à usiner (11) à afficher pendant sa saisie.
